# EUROPÄISCHE PATENTSCHRIFT

(11) **EP 0 271 794 B1**
(45) Veröffentlichungstag und Bekanntmachung des Hinweises auf die Patenterteilung: **01.03.1995**
(21) Anmeldenummer: 87118044.4
(22) Anmeldetag: 07.12.1987
(51) Int. Cl.: C09K 3/10, C04B 20/10

(54) **Werkstoff und Verfahren zum Verfugen von Kacheln**
Material and process for jointing tiles
Matière et procédé pour jointoyer des carreaux

(30) Priorität: 13.12.1986 DE 3642736; 11.03.1987 DE 3707712
(43) Veröffentlichungstag der Anmeldung: 22.06.1988
(73) Patentinhaber: Esser, Rudolf, D-28215 Bremen (DE)
(72) Erfinder: Esser, Rudolf, D-28215 Bremen (DE)
(74) Vertreter: Meissner & Bolte Patentanwälte

(56) Entgegenhaltungen:
- DE-A- 2 638 803
- GB-A- 1 364 675
- GB-A- 2 084 601
- US-A- 2 882 252
- US-A- 4 195 010

## Beschreibung

Die Erfindung betrifft einen Werkstoff zum Verfugen von Kacheln gemäß dem Oberbegriff des Anspruchs 1 und ein Verfahren zum Verfugen von Kacheln mit einem derartigen Werkstoff nach dem Oberbegriff des Anspruchs 12.

Werkstoffe zum Verfugen von Kacheln bestehen üblicherweise aus Füllstoffen und einem Ein- oder Zwei-Komponenten-Kunstharz-Bindemittel. Bei den Füllstoffen handelt es sich insbesondere um Quarzsande. Die Farbe der Verfugung wird bestimmt durch die natürliche Farbe der Quarzsande. Andersfarbige Verfugungen sind mit den bekannten Werkstoffen nicht zu erzielen.

Aus der US-A-2 882 252 geht ein Werkstoff zum Verfugen von Glas- und Keramikprodukten hervor. Dieser Werkstoff verfügt nur über ein Bindemittel , das mit Farbpigmenten eingefärbt ist. Die Verwendung eines derart gefärbten Werkstoffs zum Verfugen unglasierter Kacheln bzw. Fliesen führt zu erheblichen Reinigungsproblemen. Der Grund dafür liegt darin, daß das pigmentierte Bindemittel in die offenen Poren der unglasierten Fliesen eindringt. Es ist daher bei dem bekannten Werkstoff ein häufiges Nachreinigen notwendig, wobei die Gefahr besteht, daß sich die Farbpigmente bei der Nachreinigung noch fester in den Poren einlagern und damit zu einer bleibenden, unerwünschten Verfärbung der Kacheln bzw. Fliesen führen.

Aus der GB-A-1 364 675 ist ein farbiger Werkstoff zur Bildung von Fußbodenbelägen bekannt. Dieser verfügt über Füllstoffe, die von einer Farbschicht umgeben sind. Bei diesem Material, das vollflächig auf einen Untergrund aufgebracht wird, taucht das Problem der Verfärbung von Kacheln oder Fliesen nicht auf. Es ist auch hinsichtlich der Korngroßen nicht als Werkstoff zum Verfugen von Kacheln geeignet. Vergleichbare Werkstoffe, die ebenfalls nicht zum Verfugen von Kacheln oder Fliesen geeignet sind, sind bekannt aus der US-A-4 195 010 und der DE-A-26 38 803.

Aufgabe der Erfindung ist es, einen Werkstoff zum Verfugen von Kacheln und ein Verfahren zur Verarbeitung desselben zu schaffen, womit es möglich ist, Fugen beliebiger Farben ohne eine dauerhafte Verfärbung der zu verfugenden Kacheln herzustellen.

Ein Werkstoff zur Lösung dieser Aufgabe weist die Merkmale des Anspruchs 1 auf. Erfindungsgemaß wird der gewünschte Farbton des Werkstoffs durch gefärbte Füllstoffpartikel herbeigeführt. Durch die entsprechende Auswahl der Korngröße der Füllstoffpartikel wird sichergestellt, daß diese nicht in die offenen Poren der Kacheln oder Fliesen eindringen können. Die Gefahr einer dauerhaften Verfärbung der Kacheln bzw. Fliesen wird dadurch einfach und wirksam vermieden. Da weiterhin das Bindemittel so gewählt ist, daß es transparent ist und die Farbe der Füllstoffpartikel nicht anlöst, beeinflußt das Bindemittel die Färbung der Füllstoffpartikel nicht. In die Poren der Kacheln eventuell eindringendes Bindemittel bleibt transparent und damit unsichtbar.

Weitere vorteilhafte Ausgestaltungen des Werkstoffs sind den Unteransprüchen zu entnehmen.

Verfahrensmäßig wird der erfindungsgemäße Werkstoff nach dem Einbringen in die Kachelfugen und Abziehen emulgiert. Vorteilhafterweise erfolgt das Emulgieren des Werkstoffs durch Abwischen mit einem feuchten Grobvlies und einem anschließenden Nachwischen mit einem feuchten Schwamm. Das Emulgieren beseitigt Reste des Verfugungswerkstoffs. Außerdem wird durch das Emulgieren die Oberfläche der Verfugung geebnet und die Brillianz der farbigen Verfugung erhöht.

Im folgenden werden bevorzugte Ausführungsbeispiele der Erfindung anhand der beigefügten Zeichnung näher erläutert. In dieser zeigen:
- Fig. 1: einen Schnitt durch eine Verfugung mit einer angrenzenden Kachel in starker Vergrößerung,
- Fig. 2: ein Werkstoff zum Verfugen von Kacheln, bestehend aus einem Schwamm und einem Grobvlies in perspektivischer Darstellung, und
- Fig. 3: einen Schnitt durch eine Verfugung mit dem Werkzeug gemäß Fig. 2 in Seitenansicht.

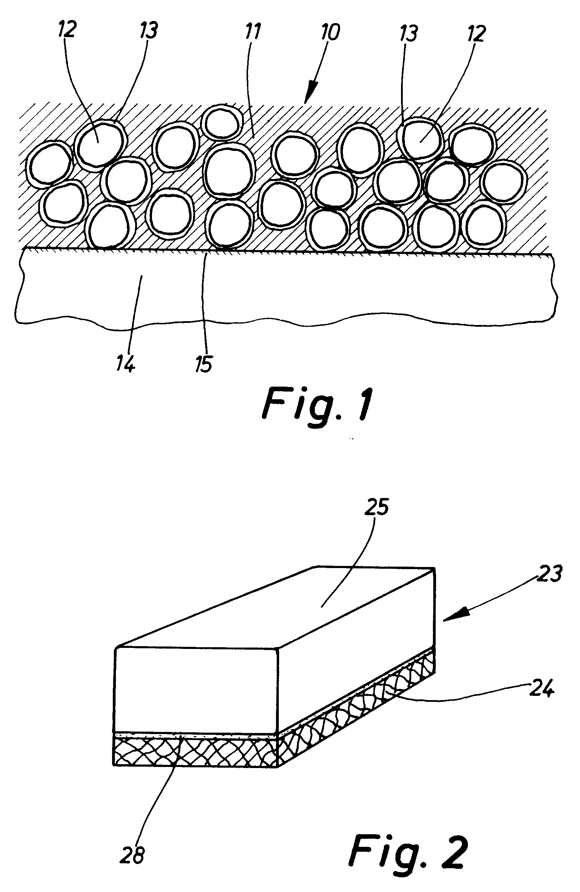

Ein Werkstoff zum Verfugen von Kacheln (Verfugungswerkstoff 10) besteht aus einem Bindemittel 11 und einem Füllstoff. Gemäß der Fig. 1 besteht dieser Füllstoff aus einzelnen Füllstoffpartikeln 12, die jeweils von einer Farbschicht 13 umgeben sind. Die Füllstoffpartikel 12 sind entweder aus Quarzkörnern (Quarzsand und/oder Quarzmehl) oder chemikalienbeständigem Ein- bzw. Mehrkomponenten-Kunststoff hergestellt. Zur Erzielung besonderer optischer Effekte können die Füllstoffpartikel 12 auch ganz oder teilweise aus metallischem Werkstoff bestehen.

Bei der Herstellung der Füllstoffpartikel 12 aus Quarz findet vorzugsweise reiner Quarzsand mit einer Körnung von 0,06 - 0,1 mm Verwendung, der erfindungsgemäß mit einer Farbschicht versehen ist. Zur Homogenisierung des Gemisches können die Füllstoffpartikel 12 auch aus einem Gemisch aus Quarzsand und Quarzmehl bestehen. Letzteres verfügt vorzugsweise dann über eine Teilchengröße von 10 bis 160 »m. Diesem Gemisch oder reinem Quarzsand können zur Verstärkung des Farbeffekts keramische Farbkörper der gewünschten Farbe zugesetzt werden. Der Anteil dieser Farbkörper an der gesamten Menge der Füllstoffpartikel 12 kann 3 - 5 % betragen. Für eine säurefeste Verfugung wird vorzugsweise nur Quarzsand als Füllstoff verwendet.

Bei einer anderen Ausführungsform der Erfindung werden die Füllstoffpartikel 12 aus Kunststoff, insbesondere thermoplastischen Kunststoff, nämlich Polyvenylchlorid, gebildet. Der Kunstsoff wird dazu gemahlen, wobei auch eine Verwendung von Kunststoff-Abfällen möglich ist. Um besonders feines Kunststoffmehl zu erhalten, erfolgt das Mahlen des Kunststoffs unter Zugabe von Stickstoff. Auch ist eine Mischung aus Kunststoff und Quarzsand zur Bildung der Füllstoffpartikel 12 denkbar.

Zur Bildung von Kunststoffpartikel 12 aus Kunststoff können auch Zwei-Komponenten-Kunststoffe, beispielsweise Zwei-Komponenten-Epoxydharz, Zwei-Komponenten-Polyesterharz oder Zwei-Komponenten-Polyurethane, verwendet werden.

In einer weiteren Ausführungsform sind phosphoreszierende und/oder fluoreszierende Bestandteile im Füllstoff enthalten. Dadurch können optische Effekte erzielt werden, wie sie z.B. in Diskotheken oder dgl. in Verbindung mit geeigneten Lichtinstallationen erwünscht sind. Zur Erzielung eines Metallic-Effekts können die Füllstoffpartikel 12 auch ganz oder teilweise aus Metallkörnern oder Metallpulver gebildet sein.

Soweit die Kunststoffpartikel 12 aus Metallkörnern bzw. -pulver oder Kunststoffkörnern bzw. -pulver gebildet sind, liegen die Korngrößen vorzugsweise unter 0,1 mm.

In einer besonders vorteilhaften Ausführungsform sind die Füllstoffpartikel 12 jeweils größer als die (in Fig. 1 nicht gezeigten) offenen Poren einer Kachel 14, so daß ein Eindringen der Füllstoffpartikel 12 in die Poren vermieden wird.

Die die Füllstoffpartikel 12 umgebende Farbschicht 13 verfügt über eine Dicke von etwa 14 »m. Die Farbschicht 13 ist fest und dauerhaft mit den Füllstoffpartikeln 12 verbunden und dabei im Bindemittel 11 nicht löslich. Dies gewährleistet, daß sich das Bindemittel 11 nicht verfärbt und dabei Farbstoffe oder -pigmente zusammen mit dem Bindemittel 11 in die offenen Poren der Kacheln 14 eindringen und deren Rand 15 verfärben. Die Farbschicht 13 besteht vorzugsweise aus einem farbigen Polyurethan-Kunststoff. Dieser Kunststoff kann als Ein- oder Zwei-Komponenten-(Polyurethan-)Material gebildet sein.

Bei Verwendung von Füllstoffpartikeln 12 aus Kunststoff oder keramischen Farbkörpern, kann die zusätzliche Farbschicht 13 entfallen, da diese Materialien bereits von sich aus die vorgesehene Farbe aufweisen, also als homogenes Ganzes durchgefärbt sind.

Weitere optische Effekte werden erzielt durch die Zugabe von metallischen oder metallisch-glänzenden Bestandteilen, vorzugsweise Silberglitter, zu den übrigen Füllstoffen.

In der Fig. 1 ist das Bindemittel 11 schraffiert dargestellt. Es ist transparent und besteht aus einem Zwei-Komponenten-System, z.B. Kunstharz + Härter. Für besondere Anwendungsbereiche wird das Bindesmittel 11 entsprechend angepaßt. Für eine säurefeste Verfugung wird ein säurefestes Zwei-Komponenten-Epoxydharz verwendet oder andere geeignete Bindemittel wie Phenolharze oder Metacrylatharze. In einer anderen Ausführungsform besteht das Bindemittel 11 aus einem Ein-Komponenten-Kunststoff, insbesondere aus einer in Wasser emulgierbaren Kunstharz-Dispersion. Darüber hinaus ist die Verwendung eines Kunstharzes auf Acryl-Basis (Acryl-Polymer) oder auf Latex-Basis möglich. Die Verwendung eines Bindemittels auf Latex-Basis ist insbesondere für säurefeste Verfugungen vorteilhaft.

Das Verhältnis von Bindemitteln (Harz + Härter) zur Füllstoffen (Quarzsand + Quarzmehl) kann 1 : 3 bis 1 : 15 betragen. Im Gegensatz zu herkömmlich eingefärbten Verfugungswerkstoffen, nämlich solchen mit einem eingefärbten Bindemittel, kann der Füllstoffanteil bei dem erfindungsgemäßen Verfugungswerkstoff bei gleichen mechanischen Eigenschaften (Festigkeit, Sprödigkeit) deutlich höher liegen. Ein herkömmlicher Verfugungswerkstoff mit einem Verhältnis Bindemittel : Füllstoff von 1 : 3 kann in der erfindungsgemäßen Ausführung, das heißt mit einer die Quarzkörner umgebenden Farbschicht, in einem Verhältnis Bindemittel : Füllstoffe von 1 : 5,5 hergestellt werden, ohne dabei schlechtere Eigenschaften aufzuweisen, Für eine Verfugung ausreichende Eigenschaften sind bis zu einem Verhältnis von Bindemittel : Füllstoffen von 1 : 15 gegeben. Die folgenden Zahlenangaben zeigen beispielhaft die genaue Zusammensetzung eines Verfugungswerkstoffs:
100 g Harz + Härter (Zwei-Komponenten-Epoxydharz)
475 g Quarzsand (0,1 - 0,3 mm) gefärbt
75 g Quarzmehl (0 -160 »m) farblos bzw. ungefärbt

Die Herstellung dieses Verfugungswerkstoffs verläuft in folgenden Schritten:
1. Der Quarzsand bzw. die einzelnen Quarzkörner werden eingefärbt.
2. Die Farbschicht auf den Quarzkörnern wird getrocknet bzw. ausgehärtet.
3. Der farbige Quarzsand wird, ggf. zusammen mit Quarzmehl, mit dem Bindemittel vermengt.

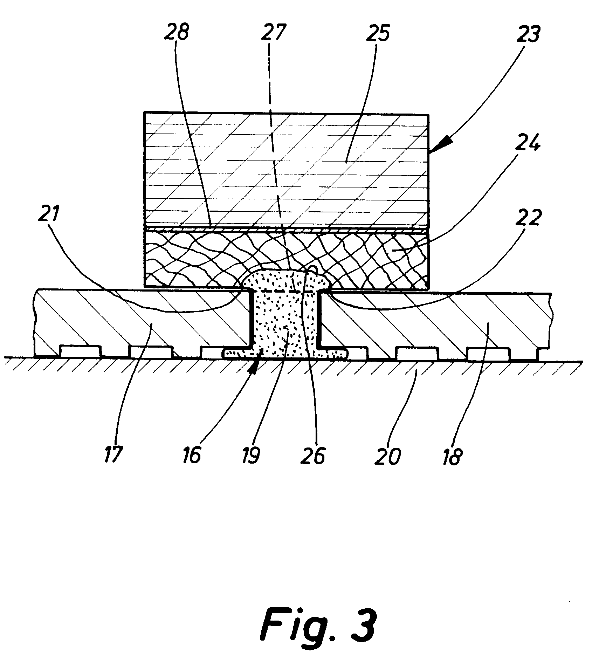

Fig. 3 zeigt einen Schnitt durch eine Verfugung in Seitenansicht. Eine Fuge 16 zwischen zwei Kacheln 17 und 18 ist mit einem Verfugungswerkstoff 19 ausgefüllt. Dieser ist der gleiche wie der Verfugungswerkstoff 10 in Fig. 1. Aufgrund des anderen Maßstabs in Fig. 3 sind jedoch die Füllstoffpartikel 12 mit den Farbschichten 13 nicht dargestellt, sondern nur als Punkte angedeutet. Die Kacheln 17, 18 sind direkt auf einem Untergrund 20 verlegt.

Das Einbringen des Verfugungswerkstoffs 19 in die Fugen 16 erfolgt ebenfalls in mehreren Schritten.
1. Zunächst wird der Verfugungswerkstoff 19 zu einer Kugel gerollt, die etwas kleiner als faustgroß ist.
2. Von dieser Kugel wird eine Scheibe abgeschnitten und diese in die Fuge 16 eingedrückt. Das Eindrücken erfolgt mit einer Verfugungskelle, die bei sonst gleichen Abmessungen etwas halb so lang ausgebildet ist wie eine handelsübliche Verfugungskelle.
3. Überstehende Reste werden mit der Verfugungskelle vom Fugenrand 21, 22 abgezogen und wieder zur Kugel des Verfugungswerkstoffs hinzugefügt.

Die beiden letzten noch zu beschreibenden Schritte (vgl. 4. und 5.) werden mit einem Werkzeug gemäß Fig. 2 ausgeführt. Das Werkzeug ist ein Doppelschwamm 23 mit einem Grobvlies 24 auf der einen und einem weichen Viskose-Schwamm 25 auf der anderen Seite ausgebildet. Das Grobvlies 24 ist eine Polyurethan-Vlies, z.B. ein Reinigungspad der Firma 3M. Der Viskose-Schwamm 25 ist geschäumt und offenporig ausgebildet.
4. Die Fuge 16 wird nochmals abgezogen, nämlich mit dem Grobvlies 24. Etwa noch überstehende Reste des Verfugungswerkstoffs 19 an den Fugenrändern 21, 22 bzw. Reste auf den Kacheln 17, 18 werden durch diesen Vorgangs entfernt und die Oberfläche 26 des Verfugungswerkstoffs 19 wird leicht aufgerauht.

Zur Darstellung dieses Vorgangs zeigt Fig. 3 die Fuge 16 mit dem noch nicht abgezogenen Verfugungswerkstoff 19 bzw. mit einer noch nicht geglätteten Oberfläche 26. Der Doppelschwamm 23 wird mit dem Grobvlies 24 über die Fuge 16 geführt und hebt dabei den Verfugungswerkstoff 19 bis auf Höhe der gestrichelten Linie 27 ab.
5. Die mit dem Grobvlies 24 abgezogene Fuge 16 wird nun mit dem Viskose-Schwamm 15 abgewischt. Dadurch wird die Oberfläche der Fuge 16, die sich nun auf Höhe der gestrichelten Linie 27 befindet, geglättet und emulgiert,

Der Doppelschwamm 23, das heißt das Grobvlies 24 und der Viskose-Schwamm 25 werden nach jedem Arbeitsgang in einer wäßrigen Alkohollösung ausgewaschen. Der Alkoholgehalt dieser Lösung beträgt etwa 5 %. Bei Verwendung eines kunstharzhaltigen Bindemittels 11 im Verfugungswerkstoff 19 gewährleistet der Alkoholgehalt der Waschlösung eine einwandfreie Reinigung des Doppelschwamms 23. Außerdem erhöht die nach jedem Auswaschen im Doppelschwamm 23 verbleibende Flüssigkeitsmenge den Glättungseffekt beim Abwischen der Fuge 16 und damit die Brillianz der farbigen Verfugung.

Der Viskose-Schwamm 25 und das Grobvlies 24 sind durch eine Schicht 28 eines bindemittel-beständigen Klebemittels dauerhaft miteinander verbunden. Bei Verwendung eines Zwei-Komponenten-Epoxydharzes als Bindemittel findet ein Klebemittel auf Silikon- oder Polyurethan-Basis Verwendung. Gemäß Fig. 2 ist das Werkzeug bzw. der Doppelschwamm 23, bestehend aus dem Grobvlies 24 und dem Viskose-Schwamm 25, von rechteckiger Gestalt. Der Viskose-Schwamm 25 ist etwa zwei- bis dreimal so hoch wie das Grobvlies 24. Der Doppelschwamm 23 soll mit einer Hand bequem zu erfassen sein und weist deshalb absolute Abmessungen (Länge : Breite : Höhe) von ca. 18 cm : 11 cm : 7 cm auf. Andere Abmessungen sind möglich, sofern die Handhabbarkeit stets gewährleistet bleibt.

## Patentansprüche

1. Werkstoff zum Verfugen von Kacheln, bestehend aus einem Ein- oder Zwei-Komponenten-Kunstharz-Bindemittel und Füllstoffen, **dadurch gekennzeichnet,** daß die Füllstoffe Füllstoffpartikel (12) enthalten, deren Korngröße größer als die Poren der Kacheln ist, wobei die Füllstoffpartikel (12) von einer Farbschicht (13) umgeben oder eingefärbt sind und die Farbschicht (13) oder die Einfärbung im Bindemittel (11) unlöslich ist, und daß das Bindemittel (11) aus einem transparenten Kunstharz besteht.

2. Werkstoff nach Anspruch 1, dadurch gekennzeichnet, daß die Farbschicht (13) aus einem Polyurethan-Kunststoff besteht, vorzugsweise mit einer Stärke bis zu 14 »m.

3. Werkstoff nach Anspruch 1 oder 2, dadurch gekennzeichnet, daß die Füllstoffpartikel (12) eine Stärke von 0,01 bis 0,3 mm aufweisen.

4. Werkstoff nach einem der Ansprüche 1 bis 3, dadurch gekennzeichnet, daß die Füllstoffe insbesondere farbloses Quarzmehl mit einer Stärke von vorzugsweise 10 bis 160 »m enthalten.

5. Werkstoff nach einem der Ansprüche 1 bis 4, dadurch gekennzeichnet, daß die Füllstoffpartikel (12) aus thermoplastischem Kunststoff, insbesondere aus Polyvinylchlorid, bestehen.

6. Werkstoff nach einem der Ansprüche 1 bis 4, dadurch gekennzeichnet, daß die Füllstoffpartikel (12) aus Metallkörnern bestehen.

7. Werkstoff nach einem der Ansprüche 1 bis 6, dadurch gekennzeichnet, daß die Füllstoffe phosphoreszierende und/oder fluoreszierende Bestandteile enthalten.

8. Werkstoff nach einem der Ansprüche 1 bis 7, dadurch gekennzeichnet, daß das Verhältnis von Bindemittel (11) zu Füllstoffen 1:3 bis 1:15, vorzugsweise 1:5 bis 1:10, beträgt.

9. Werkstoff nach einem der Ansprüche 1 bis 8, dadurch gekennzeichnet, daß das Bindemittel (11) aus einem insbesondere säurefesten, transparenten Zwei-Komponenten-Epoxydharz (Harz + Härter) besteht.

10. Werkstoff nach einem der Ansprüche 1 bis 8, dadurch gekennzeichnet, daß das Bindemittel (11) aus einem Ein-Komponenten-Kunststoff, insbesondere aus einer in Wasser emulgierbaren Kunstharzdispersion besteht.

11. Werkstoff nach einem der Ansprüche 1 bis 8, dadurch gekennzeichnet, daß das Bindemittel (11) aus einem Kunstharz auf Acryl-Basis, insbesondere aus einem Acrylpolymer besteht.

12. Verfahren zum Verfugen von Kacheln mit einem Werkstoff nach einem oder mehreren der Ansprüche 1 bis 11, bei dem der Werkstoff in Kachelfugen eingebracht und dann abgezogen wird, dadurch gekennzeichnet, daß der Werkstoff nach dem Abziehen emulgiert wird.

13. Verfahren nach Anspruch 12, dadurch gekennzeichnet, daß der Werkstoff zum Emulgieren zunächst mit einem feuchten Grobvlies (24) und dann mit einem feuchten Schwamm abgewischt wird.

14. Verfahren nach Anspruch 12 oder 13, dadurch gekennzeichnet, daß Werkzeuge zum Emulgieren jeweils nach dem Emulgieren, gegebenenfalls auch vorher, in einer wäßrigen, insbesondere 5%igen Alkohollösung ausgewaschen werden.

## Claims

1. Ceramic tile grouting material, comprising a one-or two-component synthetic resin binder and fillers, characterized in that the fillers contain filler particles (12) whose size is larger than the pores of the tiles, the filler particles (12) being surrounded or coloured by a colour layer (13) and the colour layer (13) or the colouring being insoluble in the binder (11), and in that the binder (11) comprises a transparent synthetic resin.

2. Material according to Claim 1, characterized in that the colour layer (13) comprises a polyurethane polymer, preferably having a thickness of up to 14 »m.

3. Material according to Claim 1 or 2, characterized in that the filler particles (12) have a thickness of from 0.01 to 0.3 mm.

4. Material according to one of Claims 1 to 3, characterized in that the fillers contain, in particular, colourless silica flour having a thickness of preferably from 10 to 160 »m.

5. Material according to one of Claims 1 to 4, characterized in that the filler particles (12) comprise a thermoplastic, in particular polyvinyl chloride.

6. Material according to one of Claims 1 to 4, characterized in that the filler particles (12) comprise metal particles.

7. Material according to one of Claims 1 to 6, characterized in that the fillers contain phosphorescent and/or fluorescent constituents.

8. Material according to one of Claims 1 to 7, characterized in that the ratio between binders (11) and fillers is from 1:3 to 1:15, preferably from 1:5 to 1:10.

9. Material according to one of Claims 1 to 8, characterized in that the binder (11) comprises an in particular acid-resistant, transparent, two-component epoxy resin (resin + curing agent).

10. Material according to one of Claims 1 to 8, characterized in that the binder (11) comprises a one-component resin, in particular a water-emulsifiable synthetic resin dispersion.

11. Material according to one of Claims 1 to 8, characterized in that the binder (11) comprises an acrylic-based synthetic resin, in particular made from an acrylic polymer.

12. Process for grouting ceramic tiles using a material according to one or more of Claims 1 to 11, in which the material is introduced into tile joints and then scraped off, characterized in that the material is emulsified after the scraping-off.

13. Process according to Claim 12, characterized in that, for emulsification, the material is first wiped with a moist, coarse nonwoven (24) and then with a moist sponge.

14. Process according to Claim 12 or 13, characterized in that emulsification tools are washed, after each emulsification, and optionally also beforehand, in an aqueous, in particular 5% strength alcohol solution.

## Revendications

1. Matériau pour jointoyer des carreaux de céramique, composé d'un liant mono ou bi-composant, à base de résine, et de charges, caractérisé en ce que les charges contiennent des particules de charge (12), dont la grosseur de grain est supérieure à la taille des pores des carreaux, les particules de charge (12) étant entourées d'une couche colorée (13), ou colorés dans la masse, et la couche colorée (13) ou la coloration dans la masse étant insoluble dans le liant (11), et en ce que le liant (11) est composée d'une résine synthétique transparente.

2. Matériau selon la revendication 1, caractérisé en ce que la couche colorée (13) est composée d'une matière synthétique à base de polyuréthanne, ayant, de préférence, une épaisseur allant jusqu'à 14 »m.

3. Matériau selon la revendication 1 ou 2, caractérisé en ce que les particules de charge (12) ont une épaisseur de 0,01 à 0,3 mm.

4. Matériau selon l'une des revendications 1 à 3, caractérisé en ce que les charges, en particulier de la farine de quartz incolore, sont contenues pour une épaisseur d'à peu près 10 à 160 »m.

5. Matériau selon l'une des revendications 1 à 4, caractérisé en ce que les particules de charge (12) sont composées de matière synthétique thermoplastique, en particulier de poly(chlorure de vinyle).

6. Matériau selon l'une des revendications 1 à 4, caractérisé en ce que les particules de charge (12) sont composées de grains métalliques.

7. Matériau selon l'une des revendications 1 à 6, caractérisé en ce que les charges contiennent des composants phosphorescents et/ou fluorescents.

8. Matériau selon l'une des revendications 1 à 7, caractérisé en ce que le rapport entre le liant (11) et les charges est de 1:3 à 1:15, de préférence de 1:5 à 1:10.

9. Matériau selon l'une des revendications 1 à 8, caractérisé en ce que le liant (11) est composé d'une résine époxi bi-composant transparente, en particulier résistante aux acides (résine, plus durcisseur).

10. Matériau selon l'une des revendications 1 à 8, caractérisé en ce que le liant (11) est composé d'une matière synthétique monocomposant, en particulier d'une dispersion de résine synthétique émulsifiable dans l'eau.

11. Matériau selon l'une des revendications 1 à 8, caractérisé en ce que le liant (11) est composé d'une résine synthétique à base acrylique, en particulier d'un polymère acrylique.

12. Procédé de jointoyage de carreaux de céramique avec un matériau selon l'une ou plusieurs des revendications 1 à 11, dans lequel le matériau est introduit dans les joints du carrelage puis repassé, caractérisé en ce que le matériau est émulsifié après repassage.

13. Procédé selon la revendication 12, caractérisé en ce que le matériau destiné à être émulsifié est d'abord essuyé avec un matelas grossier (24) humide, puis avec une éponge humide.

14. Procédé selon la revendication 12 ou 13, caractérisé en ce que les outils destinés à émulsifier sont lavés chaque fois après émulsification, le cas échéant également auparavant, dans une solution aqueuse alcoolique, en particulier à 5 % d'alcool.
